# EUROPEAN PATENT SPECIFICATION

(11) **EP 4 035 921 B1**
(45) Date of publication and mention of the grant of the patent: **18.09.2024**
(21) Application number: 22153536.2
(22) Date of filing: 26.01.2022
(51) Int. Cl.: B60K 17/346, F16H 48/30, B60W 10/119, B60W 10/184, B60W 30/045, B60T 8/1755, B62D 9/00, B60K 23/08, B60W 30/18

(54) **METHOD FOR CONTROLLING A 4WD TRANSMISSION OF AN AGRICULTURAL VEHICLE**
VERFAHREN ZUR STEUERUNG EINES VIERRADANTRIEBS EINES LANDWIRTSCHAFTLICHEN FAHRZEUGS
PROCÉDÉ DE COMMANDE D'UNE TRANSMISSION À QUATRE ROUES MOTRICES D'UN VÉHICULE AGRICOLE

(30) Priority: 29.01.2021 IT 202100001874
(43) Date of publication of application: 03.08.2022
(73) Proprietor: CNH Industrial Italia S.p.A., 10156 Torino (IT)
(72) Inventor: GEIRHOFER, Michael, 3361 Aschbach (AT); HUBER, Karl, 4100 Ottensheim (AT); LANGSENLEHNER, Christian, 3262 Wang (AT)
(74) Representative: CNH Industrial IP Department

(56) References cited:
- FR-A1- 2 608 530
- US-A1- 2003 216 212
- US-A1- 2019 135 245

## Description

### Field of the invention

The present invention relates to a method and system for controlling a four wheels drive transmission in an agricultural vehicle.

### Description of the prior art

Agricultural vehicles are characterized by a rear drive with a front drive that can be switched on by the driver or automatically in certain circumstances, in particular while brake pedal is depressed as shown in US2019/135245A1.

The 4WD (Four Wheels Drive) activation involves some drawbacks when the vehicle is steering on one side: while steering the turning radius of the vehicle increases, thus this causes a certain discomfort because, in reduced space, several maneuvers should be carried out.

In addition, the activation and deactivation of the front drive involves a preload on the front drive shaft, which behaves as a torsional spring. Therefore, when the driver release the brake pedal this torsional energy stored in the drive shaft is sudden unloaded at clutch opening and a "bang" can be recognized.

When the vehicle is turning on one side, the activation/deactivation of the front axle drive impacts immediately the turning radius strongly, which in turn impacts on the vehicle drivability.

It is known a solution, where according to the steering angle, the ratio of the front axle final drives is increased by a fixed factor to speed up both front wheels for getting a better steering performance as shown in US2003/216212A1. This solution destroys the soil surface and involves a significant wear of the front tires.

This increase is beneficial for reducing the steering angle but is not satisfactory to face the above drawbacks.

### Summary of the invention

Therefore, it is the main object of the present invention to provide a method for controlling a 4WD transmission in an agricultural vehicle, which improves the vehicle drivability.

The basic idea of the present invention is that when the front axle is engaged and service brakes are released the front axle is driven to have a positive lead strictly greater than zero and preferably function of a vehicle steering angle, and instead, service brakes activation causes the lead becoming zero or slightly negative, wherein the positive lead consists of a proportionally higher rotation speed of the front axle in respect of the rear axle.

"Proportionally" means that the more is positive the lead the higher is the front rotation speed with respect to the rear axle rotation speed.

A negative lead means that the front axle speed is proportionally less than the rear one.

When the 4WD transmission is enabled, the front axle is never completely disconnected in connection of the brakes activation, but there is only a lead reduction.

Advantageously, the vehicle driveability and the comfort is strongly enhanced.

Preferably, when the 4WD motion is active the front axle is dynamically driven such as when brakes are released the front axle has a (positive) lead greater (strictly) than zero, and selected in the left open range ]0; 5%] and more preferably of about 3%.

The positive lead can be managed not to be fixed but proportional to the steering angle and can be activated only when the steering angle exceeds a predetermined angle threshold.

In addition, while any manual or automatic activation of the 4WD drive is executed immediately, any manual deactivation is carried out passing through a negative lead such as to avoid the sudden discharge of the torsional energy stored in the drive shaft.

Several hardware schemes can implemented to achieve a dynamic control of the front axle connection to the driveline.

According to a first preferred embodiment of the invention, when the 4WD is active, the vehicle is helped to turn proportionally to at least one of the following parameters:
- Steering angle,
- Vehicle speed,
- Tire pressure differential between front and rear axle
- Load differential between front and rear axle.

Analogously to the positive lead, preferably, the negative lead intensity is proportional at least to the intensity of the brake activation, in the sense that the more the brake are depressed and the more the lead becomes negative. According to a first hardware implementation, the front axle connection is realized through an epicyclic gearing whose output port is controlled through an electric or hydraulic motor.

According to a second hardware implementation, the front axle connection is realized through a power split gearing. According to a third hardware implementation, the front axle connection is realized through a central controlled slip clutch or through two controlled slip clutches arranged each on one of the front wheel drive shaft, by suppressing the front differential.

These and further objects are achieved by means of the attached claims, which describe preferred embodiments of the invention, forming an integral part of the present description.

### Brief description of the drawings

The invention will become fully clear from the following detailed description, given by way of a mere exemplifying and non limiting example, to be read with reference to the attached drawing figures, wherein:

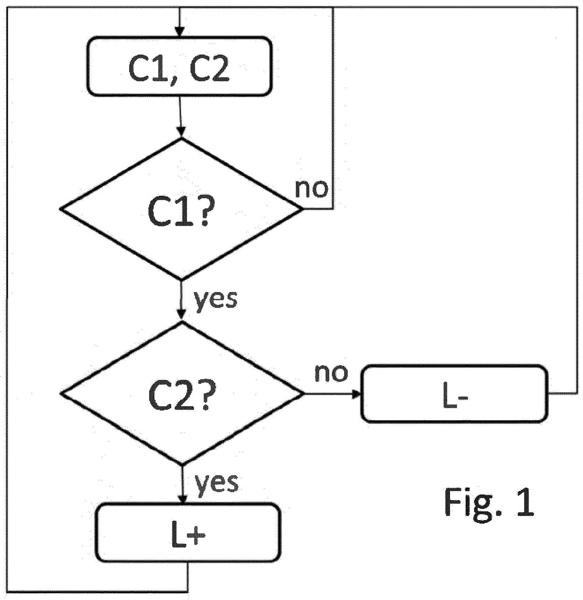

- Fig. 1 discloses a flow diagram disclosing an exemplary implementation of the method of the present invention,
- Figs. 2 - 5 disclose known hardware scheme, but arranged to work according to the present inventive method.

The same reference numerals and letters in the figures designate the same or functionally equivalent parts.

According to the present invention, the term "second element" does not imply the presence of a "first element", first, second, etc.. are used only for improving the clarity of the description and they should not be interpreted in a limiting way.

### Detailed description of the preferred embodiments

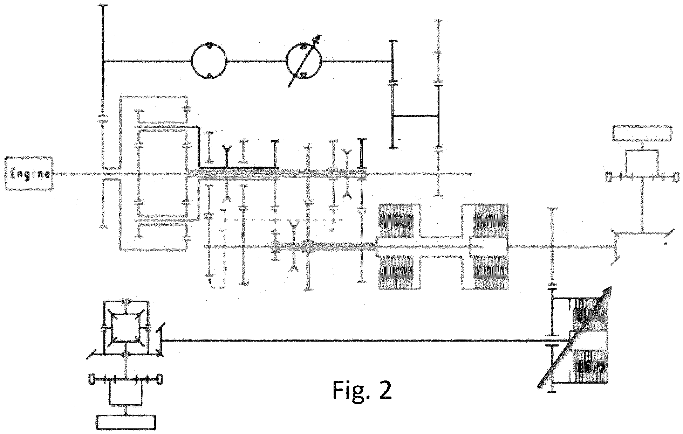

Figures 2 - 5 disclose known hardware layouts for 4WD vehicles.

Fig. 2 shows a scheme of standard driveline of an agricultural vehicle where the standard on/off clutch is replaced by a more precise, intelligent 4WD clutch actuation. Such a clutch controlled 4WD system is known from modern passenger cars and can control the torque split independent between front and rear axle by an accurate controlled slip in the clutch.

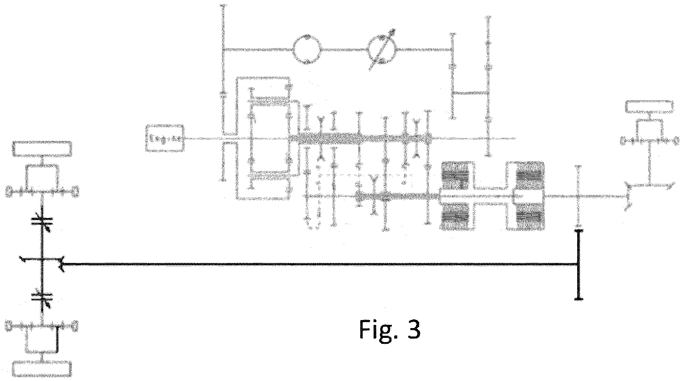

The present scheme in Fig. 3 use the same base idea as shown in Fig. 2 but there the known on/off clutch is replaced by two controlled clutches in the front axle on each wheel side. Thanks to this layout the differential in the front axle is not necessary anymore. Additional to the torque split between front and rear axle this layout allows also a variable torque to each front wheel. The differential function is also ensured by the controlled slip in the clutch.

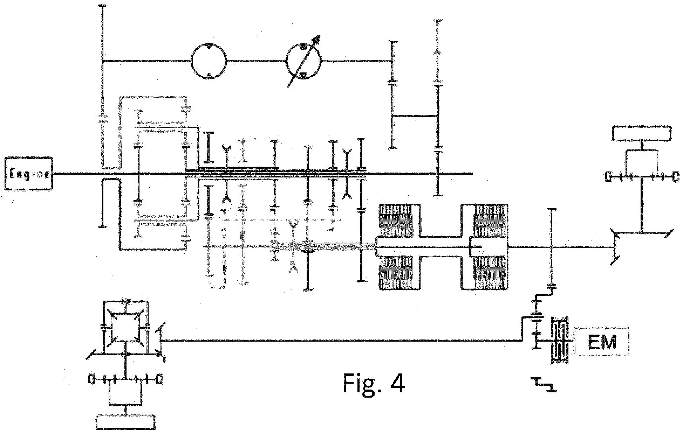

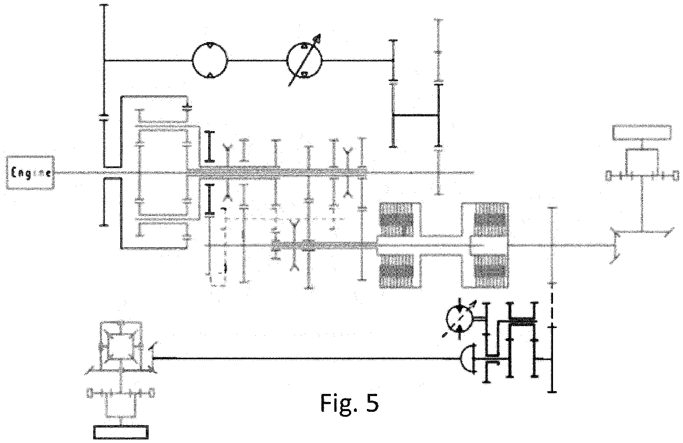

The schemes in Fig. 4 and Fig. 5 show the same base idea. The standard on/off clutch is replaced by a powersplit gear which has a first input path from the transmission and second input path from a controlled electric EM (Fig. 4) or hydraulic (Fig. 5) motor. With such a layout, the torque can be transferred wear-free infinitely variable to the front axle.

According to the present invention, any of the above 4WD transmissions of an agricultural vehicle, wherein the front axle drive can be selectively activated or deactivated, is controlled in such a way that when the front axle is engaged (C1=yes) and
- service brakes are released (C2=yes) the front axle is driven to have a positive lead strictly greater than zero (L+) and preferably function of the vehicle steering angle, and
- instead, service brakes activation (C2=no) causes the lead becoming zero or slightly negative (L-).

As disclosed above, the positive lead consists of a proportionally higher rotation speed of the front axle in respect of the rear axle.

The positive lead is less than 5% and preferably of about 3%. Preferably, the positive lead is dynamically adjusted directly proportionally with a steering angle, linearly or exponentially between two predetermined upper and lower thresholds.

The slightly negative lead is intended in the range of [-3%:0%].

According to another preferred embodiment that can be combined with any of the previous ones, the negative lead is directly proportional to an intensity of the service brakes activation. In other words, the lead becomes more and more negative in accordance with the intensity of the braking pedal depressing.

According to a preferred embodiment of the invention, the deactivation of the front axle drive is preceded by a negative lead increase and then to the disconnection of the front axle in order to avoid the abovementioned "bang".

The present invention relates also to a 4WD transmission of an agricultural vehicle comprising a rear axle always connected directly or indirectly to a prime mover and a front axle selectively connectable to the prime mover, wherein the 4WD transmission is arranged in such a way that
- when service brakes are released the front axle has a positive lead strictly greater than zero and preferably proportional with a vehicle steering angle,
- when, instead, service brakes are activated, the lead is zero or slightly negative.

According to a preferred embodiment of the invention, the front axle connection is realized through an epicyclic gearing whose output port is controlled through an electric EM or hydraulic motor in order to adjust a rotation speed ratio between front axle and rear axle.

Sometimes the agricultural vehicles are provided of a left and right brake pedals, each arranged to brake the wheels of one side of the vehicle.

According to a preferred embodiment of the invention, the agricultural vehicle comprises at least rear brakes arranged such that the left rear brake can be controlled independently from the right rear brake. Here, elaborating means, preferably coinciding with the Vehicle Control Unit (VHE), are arranged to automatically select and activate the rear left or right wheel to be braked in accordance with a vehicle turning side, defined by the steering wheel rotation, such that to help vehicle turning.

Advantageously the braked rear wheel works as a fulcrum helping the vehicle in its turning operations.

However, such useful is preferably activated only when
- the vehicle speed is below a predetermined speed threshold, wherein such threshold is between 7 and 15 km/h, preferably 10;
- any implement allegedly connected to the vehicle is not operative;
- an implement allegedly connected to the front of the vehicle is raised in an non-operative condition;
- the load over the rear axle is at least 40% of an overall load;
- the vehicle forward motion is engaged.

It should be considered that the VHE is connected to the CAN network, thus it is aware of any of the above operating conditions that can be monitored in order to enable/disable the above "single braking" procedure carried out over one of the rear wheels.

It should be clear that only the rear wheels are involved in this procedure.

About the load distribution over the front/rear axle pressure sensors can be associated to axles or to each of the axles suspensions, or an algorithm can be implemented to estimate such distribution. An exemplary algorithm is disclosed on EP3760986.

This invention can be implemented advantageously in a computer program comprising program code means for performing one or more steps of such method, when such program is run on a computer. For this reason, the patent shall also cover such computer program and the computer-readable medium that comprises a recorded message, such computer-readable medium comprising the program code means for performing one or more steps of such method, when such program is run on a computer.

Many changes, modifications, variations and other uses and applications of the subject invention will become apparent to those skilled in the art after considering the specification and the accompanying drawings which disclose preferred embodiments thereof as described in the appended claims.

The features disclosed in the prior art background are introduced only in order to better understand the invention and not as a declaration about the existence of known prior art. In addition, said features define the context of the present invention, thus such features shall be considered in common with the detailed description.

Further implementation details will not be described, as the man skilled in the art is able to carry out the invention starting from the teaching of the above description.

## Claims

1. Method for controlling a 4WD transmission of an agricultural vehicle wherein the front axle drive can be selectively activated or deactivated, **characterized in that** when the front axle is engaged (C1=yes) and
- service brakes are released (C2=yes) the front axle is driven to have a positive lead strictly greater than zero (L+) and preferably function of a vehicle steering angle, and
- instead, service brakes activation (C2=no) causes the lead becoming zero or slightly negative (L-),
wherein the positive lead consists of a proportionally higher rotation speed of the front axle in respect of the rear axle.

2. Method according to claim 1, wherein said positive lead strictly greater than zero is proportional to the vehicle steering angle and beyond a predetermined steering angle threshold, preferably beyond 10 degrees from a longitudinal vehicle axis.

3. Method according to claim 1 or 2, wherein the positive lead is in the left open range ]0; 5%] and preferably about 3%.

4. Method according any one of the previous claims 2 or 3, wherein the positive lead is directly proportional with a steering angle linearly or exponentially.

5. Method according to claim 4, wherein an intensity of said positive lead is proportional to at least one of the following parameters:
- Vehicle speed,
- Tire pressure differential between front and rear axle
- Load differential between front and rear axle.

6. Method according to any one of the previous claims, wherein said slightly negative lead is in the range [-3%:0%].

7. Method according to any one of previous claims, wherein the slightly negative lead is directly proportional to an intensity of the service brakes activation.

8. Method according to any one of previous claims, wherein a deactivation of the front axle drive is carried out through negative lead increase to smooth an immediately following front axle drive deactivation.

9. Method according to any one of the previous claims, further comprising an automatic rear wheel braking procedure, wherein the wheel to be braked is selected in accordance with a vehicle turning side defined by the steering wheel angle, such that to help vehicle turning.

10. Method according to claim 9, wherein said automatic rear wheel braking is carried out when at least one of the following conditions is fulfilled:
- a vehicle speed is below a predetermined speed threshold, wherein such threshold is between 7 and 15 km/h, preferably 10;
- an implement connected to the vehicle is not operative;
- an implement connected to the front of the vehicle is raised in an non-operative condition;
- the load over the rear axle is at least 40% of an overall load;
- the vehicle forward motion is engaged.

11. 4WD transmission of an agricultural vehicle comprising a rear axle always connected directly or indirectly to a prime mover and a front axle selectively connectable to the prime mover, **characterized in that** the 4WD transmission is arranged in such a way that
- when service brakes are released, the front axle has a positive lead strictly greater than zero and preferably function of a vehicle steering angle,
- when, instead, service brakes are activated, the lead is zero or slightly negative,
wherein the positive lead is a proportionally higher rotation speed of the front axle in respect of the rear axle.

12. Transmission according to claim 11, wherein the front axle connection is realized through an epicyclic gearing whose output port is controlled through an electric (EM) or hydraulic motor in order to adjust a rotation speed ratio between front axle and rear axle.

13. Transmission according to claim 11, wherein the front axle connection is realized through a power split gearing.

14. Transmission according to claim 11, wherein the front axle connection is realized through a central controlled slip clutch.

15. Transmission according to claim 11, wherein the front axle connection is realized through two controlled slip clutches arranged each on one of the front wheel drive shafts, without any front differential.

16. Agricultural vehicle comprising a 4WD transmission according to any one of the previous claims 11 - 15.

17. Vehicle according to claim 16, further comprising rear brakes arranged such that a left rear brake can be controlled independently from a right rear brake and elaborating means arranged to select the brake to be activated in accordance with a vehicle turning side, defined by the steering wheel angle, such that to help vehicle turning.

18. Vehicle according to claim 17, wherein said elaborating means are arranged to command said automatic rear wheel braking when at least one of the following conditions is fulfilled:
- a vehicle speed is below a predetermined speed threshold, wherein such threshold is between 7 and 15 km/h, preferably 10;
- an implement connected to the vehicle is not operative;
- an implement connected to the front of the vehicle is raised in an non-operative condition;
- the load over the rear axle is at least 40% of an overall load;
- the vehicle forward motion is engaged.

19. Computer program comprising computer program code means adapted to perform all the steps of any one of the claims 1 - 10, when said program is run on a computer.

20. A computer readable medium having a program recorded thereon, said computer readable medium comprising computer program code means adapted to perform all the steps of any one of the claims 1 - 10, when said program is run on a computer.

## Patentansprüche

1. Verfahren zum Steuern eines 4WD-Getriebes eines landwirtschaftlichen Fahrzeugs, wobei der Vorderachsantrieb selektiv aktiviert oder deaktiviert werden kann, **dadurch gekennzeichnet, dass**, wenn die Vorderachse eingekoppelt ist (C1 = Ja), und
- Betriebsbremsen gelöst sind (C2 = Ja), die Vorderachse so angetrieben wird, dass sie eine positive Voreilung aufweist, die strikt größer als null (L+) und vorzugsweise abhängig von einem Fahrzeug-Lenkwinkel ist, und
- stattdessen eine Betriebsbremsen-Aktivierung (C2 = Nein) verursacht, dass die Voreilung null oder leicht negativ (L-) wird,
wobei die positive Voreilung aus einer proportional höheren Drehzahl der Vorderachse in Bezug auf die Hinterachse besteht.

2. Verfahren nach Anspruch 1, wobei die positive Voreilung, die strikt größer als null ist, über einem vorbestimmten Lenkwinkel-Grenzwert, vorzugsweise bei mehr als 10° zu einer Längsfahrzeugachse, proportional zum Fahrzeug-Lenkwinkel ist..

3. Verfahren nach Anspruch 1 oder 2, wobei die positive Voreilung in dem links offenen Bereich ]0; 5 %] liegt und bevorzugt etwa 3 % ist.

4. Verfahren nach einem der vorhergehenden Ansprüche 2 oder 3, wobei die positive Voreilung linear oder exponentiell direkt proportional zu einem Lenkwinkel ist.

5. Verfahren nach Anspruch 4, wobei die Intensität der positiven Voreilung proportional zu zumindest einem der folgenden Parametern ist:
- Fahrzeuggeschwindigkeit,
- Reifendruckdifferenz zwischen Vorder- und Hinterachse
- Lastdifferenz zwischen Vorder- und Hinterachse.

6. Verfahren nach einem der vorhergehenden Ansprüche, wobei die leicht negative Voreilung in dem Bereich von [-3 %: 0 %] liegt.

7. Verfahren nach einem der vorhergehenden Ansprüche, wobei die leicht negative Voreilung direkt proportional zu einer Intensität der Betriebsbremsen-Aktivierung ist.

8. Verfahren nach einem der vorhergehenden Ansprüche, wobei eine Deaktivierung des Vorderachsantriebs durch einen negativen Voreilungs-Anstieg ausgeführt wird, um eine unmittelbare nachfolgende Vorderachsantriebs-Deaktivierung auszugleichen.

9. Verfahren nach einem der vorhergehenden Ansprüche, das des Weiteren einen automatischen Hinterradbremsvorgang aufweist, wobei das zu bremsende Rad entsprechend einer Fahrzeuglenkseite ausgewählt wird, die durch den Lenkradwinkel definiert ist, so dass ein Lenken des Fahrzeugs unterstützt wird.

10. Verfahren nach Anspruch 9, wobei das automatische Hinterradbremsen ausgeführt wird, wenn zumindest eine der folgenden Bedingungen erfüllt ist,
- eine Fahrzeuggeschwindigkeit liegt unter einem vorbestimmten Geschwindigkeitsgrenzwert, wobei ein solcher Grenzwert zwischen 7 und 15 km/h, bevorzugt 10 beträgt;
- ein Arbeitsgerät, das mit dem Fahrzeug verbunden ist, ist nicht in Betrieb;
- ein Arbeitsgerät, das mit der Vorderseite des Fahrzeugs verbunden ist, ist in einen nicht betriebsbereiten Zustand angehoben;
- die Last über der Hinterachse beträgt zumindest 40 % einer Gesamtlast;
- die Fahrzeug-Vorwärtsbewegung ist eingelegt.

11. 4WD-Getriebe eines landwirtschaftlichen Fahrzeugs, das eine Hinterachse, die permanent direkt oder indirekt mit einem Hauptantrieb verbunden ist, und eine Vorderachse aufweist, die selektiv mit dem Hauptantrieb verbindbar ist, **dadurch gekennzeichnet, dass**
das 4WD-Getriebe derart ausgebildet ist, dass
- wenn Betriebsbremsen gelöst sind, die Vorderachse eine positive Voreilung aufweist, die strikt größer als null und vorzugsweise abhängig von einem Fahrzeug-Lenkwinkel ist,
- wenn, stattdessen, Betriebsbremsen aktiviert sind, die Voreilung null oder leicht negativ ist,
wobei die positive Voreilung eine proportional höhere Drehzahl der Vorderachse in Bezug auf die Hinterachse ist.

12. Getriebe nach Anspruch 11, wobei die Vorderachsverbindung durch ein Planetengetriebe realisiert ist, dessen Ausgangsanschluss mittels eines elektrischen (EM) oder eines hydraulischen Motors gesteuert wird, um ein Drehzahlverhältnis zwischen der Vorder- und der Hinterachse zu verstellen.

13. Getriebe nach Anspruch 11, wobei die Vorderachsverbindung durch ein PowerSplit-Getriebe realisiert ist.

14. Getriebe nach Anspruch 11, wobei die Vorderachsverbindung durch eine zentral gesteuerte Rutschkupplung realisiert ist.

15. Getriebe nach Anspruch 11, wobei die Vorderachsverbindung durch zwei gesteuerte Rutschkupplungen realisiert ist, die jeweils, ohne ein vorderes Differenzial, an einer der Vorderrad-Antriebswellen angeordnet sind.

16. Landwirtschaftliches Fahrzeug, das ein 4WD-Getriebe nach einem der vorhergehenden Ansprüche 11 bis 15 aufweist.

17. Fahrzeug nach Anspruch 16, das des Weiteren hintere Bremsen, die derart ausgebildet sind, dass eine linke hintere Bremse unabhängig von einer rechten hinteren Bremse gesteuert werden kann, und Verarbeitungsmittel aufweist, die dazu ausgebildet sind, die zu aktivierende Bremse entsprechend einer Fahrzeug-Lenkseite auszuwählen, die durch den Lenkradwinkel definiert ist, so dass ein Lenken des Fahrzeugs unterstützt wird.

18. Fahrzeug nach Anspruch 17, wobei die Verarbeitungsmittel dazu ausgebildet sind, das automatische Hinterradbremsen zu steuern, wenn zumindest eine der folgenden Bedingungen erfüllt ist:
- eine Fahrzeuggeschwindigkeit liegt unter einem vorbestimmten Geschwindigkeitsgrenzwert, wobei ein solcher Grenzwert zwischen 5 und 15 km/h, bevorzugt 10 beträgt;
- ein Arbeitsgerät, das mit dem Fahrzeug verbunden ist, ist nicht in Betrieb;
- ein Arbeitsgerät, das mit der Vorderseite des Fahrzeugs verbunden ist, ist in einen nicht betriebsbereiten Zustand angehobenen;
- die Last über der Hinterachse beträgt zumindest 40 % einer Gesamtlast;
- die Fahrzeug-Vorwärtsbewegung ist eingelegt.

19. Computerprogramm, das Computerprogramm-Kodierungsmittel aufweist, die dazu ausgebildet sind, alle Schritte nach einem der Ansprüche 1 bis 10 auszuführen, wenn das Programm auf einem Computer ausgeführt wird.

20. Computerlesbares Medium, das ein Programm darauf gespeichert hat, wobei das computerlesbare Medium Computerprogramm-Kodierungsmittel aufweist, die dazu ausgebildet sind, alle Schritte nach einem der Ansprüche 1 bis 10 auszuführen, wenn das Programm auf einem Computer ausgeführt wird.

## Revendications

1. Procédé de commande d'une transmission 4RM d'un véhicule agricole dans lequel l'entraînement de l'essieu avant peut être activé ou désactivé de manière sélective, **caractérisé en ce que** lorsque l'essieu avant est engagé (C1=yes) et
- les freins de service sont desserrés (C2=yes), l'essieu avant est entraîné avec une avance positive strictement supérieure à zéro (L+) et de préférence fonction d'un angle de braquage du véhicule, et
- à l'inverse, lorsque les freins de service sont activés (C2=no), l'avance est nulle ou légèrement négative (L-),
dans lequel l'avance positive consiste en une vitesse de rotation proportionnellement plus élevée de l'essieu avant par rapport à l'essieu arrière.

2. Procédé selon la revendication 1, dans lequel ladite avance positive strictement supérieure à zéro est proportionnelle à l'angle de braquage du véhicule et dépasse un seuil d'angle de braquage prédéterminé, de préférence supérieur à 10 degrés par rapport à un axe longitudinal du véhicule.

3. Procédé selon la revendication 1 ou la revendication 2, dans lequel l'avance positive se trouve dans la plage ouverte gauche [0 ; 5 %] et de préférence autour de 3 %.

4. Procédé selon l'une quelconque des revendications précédentes 2 ou 3, dans lequel l'avance positive est directement proportionnelle à un angle de braquage de manière linéaire ou exponentielle.

5. Procédé selon la revendication 4, dans lequel une intensité de ladite avance positive est proportionnelle à au moins un des paramètres suivants :
- vitesse du véhicule,
- différence de pression des pneus entre l'essieu avant et l'essieu arrière,
- différence de charge entre l'essieu avant et l'essieu arrière.

6. Procédé selon l'une quelconque des revendications précédentes, dans lequel ladite avance légèrement négative est comprise dans la plage [3 % : 0 %].

7. Procédé selon l'une quelconque des revendications précédentes, dans lequel l'avance légèrement négative est directement proportionnelle à l'intensité de l'activation des freins de service.

8. Procédé selon l'une quelconque des revendications précédentes, dans lequel une désactivation de l'entraînement de l'essieu avant est effectuée par le biais de l'augmentation de l'avance négative afin d'adoucir une désactivation de l'entraînement de l'essieu avant immédiatement après.

9. Procédé selon l'une quelconque des revendications précédentes, comprenant en outre une procédure de freinage automatique de la roue arrière, dans lequel la roue à freiner est sélectionnée conformément à un côté de braquage du véhicule défini par l'angle du volant de direction, de manière à aider le véhicule à tourner.

10. Procédé selon la revendication 9, dans lequel ledit freinage automatique des roues arrière est effectué lorsqu'au moins une des conditions suivantes est remplie :
- la vitesse d'un véhicule est inférieure à un seuil de vitesse prédéterminé, dans lequel ce seuil est compris entre 7 et 15 km/h, de préférence 10 ;
- un outil raccordé au véhicule ne fonctionne pas ;
- un outil raccordé à l'avant du véhicule est levé dans un état non fonctionnel ;
- la charge au niveau de l'essieu arrière représente au moins 40 % de la charge totale ;
- la marche avant du véhicule est engagée.

11. Transmission 4RM d'un véhicule agricole comprenant un essieu arrière toujours raccordé directement ou indirectement à un moteur primaire et un essieu avant pouvant être raccordé de manière sélective au moteur primaire, **caractérisée en ce que**
la transmission 4RM est agencée de telle sorte que
- lorsque les freins de service sont desserrés, l'essieu avant a une avance positive strictement supérieure à zéro et de préférence fonction d'un angle de braquage du véhicule,
- lorsque, à l'inverse, les freins de service sont activés, l'avance est nulle ou légèrement négative,
dans lequel l'avance positive est une vitesse de rotation proportionnellement plus élevée de l'essieu avant par rapport à l'essieu arrière.

12. Transmission selon la revendication 11, dans laquelle le raccordement de l'essieu avant est réalisé par un engrenage épicycloïdal dont l'orifice de sortie est commandé par un moteur électrique (EM) ou hydraulique afin d'ajuster un rapport de vitesse de rotation entre l'essieu avant et l'essieu arrière.

13. Transmission selon la revendication 11, dans laquelle le raccordement de l'essieu avant est réalisé par le biais d'un engrenage à répartition de puissance.

14. Transmission selon la revendication 11, dans laquelle le raccordement de l'essieu avant est réalisé par le biais d'un embrayage de sécurité à commande centrale.

15. Transmission selon la revendication 11, dans laquelle le raccordement de l'essieu avant est réalisé par deux embrayages de sécurité commandés disposés chacun sur l'un des arbres d'entraînement des roues avant, sans différentiel avant.

16. Véhicule agricole comprenant une transmission 4RM selon l'une quelconque des revendications 11 à 15 précédentes.

17. Véhicule selon la revendication 16, comprenant en outre des freins arrière agencés de telle sorte qu'un frein arrière gauche puisse être commandé indépendamment d'un frein arrière droit et des moyens d'élaboration agencés pour sélectionner le frein à activer conformément au côté de braquage d'un véhicule, défini par l'angle du volant de direction, de manière à aider le véhicule à tourner.

18. Véhicule selon la revendication 17, dans lequel lesdits moyens d'élaboration sont agencés pour commander ledit freinage automatique des roues arrière lorsqu'au moins une des conditions suivantes est remplie :
- la vitesse d'un véhicule est inférieure à un seuil de vitesse prédéterminé, dans lequel ce seuil est compris entre 7 et 15 km/h, de préférence 10 ;
- un outil raccordé au véhicule ne fonctionne pas ;
- un outil raccordé à l'avant du véhicule est levé dans un état non fonctionnel ;
- la charge au niveau de l'essieu arrière représente au moins 40 % de la charge totale ;
- la marche avant du véhicule est engagée.

19. Programme informatique comportant des moyens pour coder un programme informatique, adapté pour réaliser toutes les étapes de l'une quelconque des revendications 1 à 10, lorsque ledit programme est exécuté sur un ordinateur.

20. Un support lisible par ordinateur sur lequel est enregistré un programme, ledit support lisible par ordinateur comprenant des moyens pour coder un programme informatique adapté pour exécuter toutes les étapes de l'une quelconque des revendications 1 à 10, lorsque ledit programme est exécuté sur un ordinateur.
